# EUROPÄISCHE PATENTANMELDUNG

(11) **EP 2 765 464 A1**
(43) Veröffentlichungstag der Anmeldung: **13.08.2014**
(21) Anmeldenummer: 13154620.2
(22) Anmeldetag: 08.02.2013
(51) Int. Cl.: G05B 9/03, G05B 19/042, G06F 11/16

(54) **Verfahren zum Betreiben eines redundanten Automatisierungssystems**

(71) Anmelder: Siemens Aktiengesellschaft, 80333 München (DE)
(72) Erfinder: Grosch, Thomas, 90574 Roßtal (DE); Renschler, Albert, 76275 Ettlingen (DE)

(57) **Zusammenfassung**

Die Erfindung betrifft ein Verfahren zum Betreiben eines redundanten, mit einem Master (M) und einem Slave (S) versehenen Automatisierungssystems, welche während der Steuerung eines technischen Prozesses jeweils ein Steuerprogramm (Pm, Ps) verarbeiten, wobei für den Fall, dass der Master (M) ausfällt, der Slave (S) die Funktion des Masters (M) übernimmt und der Master (M) dem Slave (S) Lebenszeichen (Lz) übermittelt, die anzeigen, dass der Master (M) im Run-Betrieb ist. Es werden Maßnahmen vorgeschlagen, mittels welcher störende Auswirkungen eines transienten Fehlers in einem redundanten Automatisierungssystem weitgehend vermieden werden.

## Beschreibung

Die Erfindung betrifft ein Verfahren zum Betreiben eines redundanten, mit einem Master und einem Slave versehenen Automatisierungssystems, welche während der Steuerung eines technischen Prozesses jeweils ein Steuerprogramm verarbeiten, wobei für den Fall, dass der Master ausfällt, der Slave die Funktion des Masters übernimmt und der Master dem Slave Lebenszeichen übermittelt, die anzeigen, dass der Master im Run-Betrieb ist. Darüber hinaus betrifft die Erfindung ein redundantes Automatisierungssystem, welches zur Durchführung des Verfahrens geeignet ist.

Im Automatisierungsumfeld werden verstärkt hochverfügbare Lösungen (H-Systeme) gefordert, welche geeignet sind, eventuell auftretende Stillstandszeiten der Anlage auf ein Minimum zu reduzieren. Die Entwicklung derartiger hochverfügbarer Lösungen ist sehr kostenintensiv, wobei ein im Automatisierungsumfeld gewöhnlich eingesetztes H-System sich dadurch auszeichnet, dass zwei oder mehrere Teilsysteme in Form von Automatisierungsgeräten oder Rechnersystemen über eine Synchronisationsverbindung miteinander gekoppelt sind. Auf die an dieses H-System angeschlossenen Peripherieeinheiten können prinzipiell beide Teilsysteme lesend und/oder schreibend zugreifen. Eines der beiden Teilsysteme ist bezüglich der an das System angeschlossenen Peripherie führend. Dies bedeutet, dass Ausgaben zu Peripherieeinheiten bzw. Ausgangsinformationen für diese Peripherieeinheiten nur von einem der beiden Teilsysteme durchgeführt werden, welches als Master arbeitet bzw. die Masterfunktion übernommen hat. Damit beide Teilsysteme synchron ablaufen können, werden diese über die Synchronisationsverbindung in regelmäßigen Abständen synchronisiert. Bezüglich der Häufigkeit der Synchronisation und deren Umfang können verschiedene Ausprägungen unterschieden werden (warmstandby, hot-standby).

Häufig wird von einem H-System ein stoßfreies "Failover" gefordert, falls eines der Teilsysteme ausfällt und auf das andere Teilsystem umgeschaltet werden muss. Dies bedeutet, dass trotz dieser ungeplanten Umschaltung bzw. diesem ungeplanten Wechsel von einem auf das andere Teilsystem diese Umschaltung bzw. dieser Wechsel sich nicht störend auf den zu steuernden technischen Prozess auswirkt. Dabei ist zulässig, dass an den Ausgängen der angeschlossenen Peripherie eine (kurze) Totzeit auftreten darf, während der die Ausgänge auf ihren zuletzt gültigen Prozessausgangswerten verharren. Ein Sprung (Stoß) der Werte an diesen Ausgängen aufgrund der Umschaltung ist jedoch nicht erwünscht und sollte daher vermieden werden. Unter stoßfrei ist daher auch die Stetigkeit des Kurvenverlaufs der Prozessausgangswerte zu verstehen.
Um dies zu erreichen, müssen die beiden Teilsysteme zum Zeitpunkt des Ausfalls den gleichen Systemzustand aufweisen. Dies wird durch das geeignete Synchronisationsverfahren sichergestellt. Verarbeiten beide Teilsysteme die Eingangsinformationen (Eingaben) des Prozesses, so befinden sich beide Systeme dann im gleichen Systemzustand, wenn sie - bei gleichen Prozesseingangsdaten bzw. Prozesseingangsinformationen - ihre jeweiligen "thread-globalen" Daten (gemeinsame Daten von Programmen, insbesondere von Programmen unterschiedlicher Prioritäten) in gleicher Weise verändern. Um dies zu erreichen, stellt das Synchronisationsverfahren sicher, dass die einzelnen Threads der beiden Teilsysteme in gleicher Art und Weise unterbrochen bzw. abgearbeitet werden. Damit ergibt sich ein identisches "Threadgebirge".

Aus dem Siemens-Katalog ST 70, Kapitel 6, Ausgabe 2011 ist ein redundantes, aus zwei Teilsystemen - aus einem Master und einem Slave bzw. einer Reserve - bestehendes Automatisierungssystem bekannt, welches dazu vorgesehen ist, die Verfügbarkeit einer zu steuernden Anlage zu erhöhen. Dazu ist das Automatisierungssystem mit Mitteln versehen, welche aufgrund eines Ereignisses zunächst entscheiden, welches Programm gestartet werden muss, um geeignet auf das Ereignis zu reagieren. Für den Fall, dass beispielsweise während der Ausführung eines Programms ein Ereignis in Form eines anstehenden Alarms des zu steuernden technischen Prozesses an einem Meldeeingang des Automatisierungssystems anliegt, wird gewöhnlich das laufende Programm an einem Wartepunkt angehalten und ein Programm gestartet, das zur Analyse des Alarms und zum Einleiten von Maßnahmen vorgesehen ist, welche die Ursache des Alarms beheben. Dieses Automatisierungssystem wird regelmäßig synchronisiert und es ist sichergestellt, dass der Ausfall eines dieser Teilsysteme sich nicht störend auf einen zu steuernden Prozess auswirkt, weil das andere Teilsystem die Ausführung bzw. die Bearbeitung des entsprechenden Teils seines jeweiligen Steuerprogramms oder die Ausführung bzw. die Bearbeitung der entsprechenden Teile dieses Steuerprogramms fortsetzen kann.
Für den Fall, dass z. B. ein auf einem ersten Teilsystem aufgetretenes Ereignis nicht mit einem zweiten Teilsystem eines zwei Teilsysteme umfassenden Automatisierungssystems synchronisiert wird und nach der Bearbeitung des Ereignisses durch das erste Teilsystem dieses Teilsystem ausfällt, kann der Verlauf eines zu steuernden technischen Prozesses gestört werden; denn das zweite Teilsystem durchläuft - ohne Kenntnis des Ereignisses - einen anderen, die Ausführungs-Reihenfolge der Programme repräsentierenden Programmpfad als den, welchen das zweite Teilsystem in Kenntnis des Ereignisses durchlaufen würde und der auch erforderlich wäre, um den genannten Verlauf des zu steuernden technischen Prozesses nicht zu stören.

In diesem Zusammenhang wird darauf hingewiesen, dass unter einem Programm sowohl ein Programm als solches, als auch ein Unterprogramm, ein Teil eines Programms, eine Task, ein Thread, ein Organisationsbaustein, ein Funktionsbaustein oder ein sonstiger geeigneter Programmcode zur Verwirklichung einer Automatisierungsfunktion verstanden wird, wobei die Programme eines Automatisierungssystems gewöhnlich in Prioritätsklassen eingeteilt sind und gemäß ihrer zugeordneten Priorität bearbeitet bzw. ausgeführt werden.

Aus der EP 0 907 912 B1 ist ein Synchronisationsverfahren für ein aus zwei Teilsystemen aufgebautes Automatisierungssystem bekannt. Dieses Synchronisationsverfahren basiert auf einer zeitlich synchronen Kopplung der beiden Teilsysteme, wobei an geeigneten Programmstellen, an denen ein Abgleich vorgesehen ist, beide Teilsysteme auf eine Antwort des jeweils anderen Teilnehmers warten und erst bei Erhalt der Antwort jeweils ihre Programmverarbeitung zeitlich synchron fortsetzen. Allerdings kommt es häufig dann zu Synchronisationsproblemen, wenn in einem der beiden Teilsysteme transiente Fehler auftreten. Eine mögliche Ursache für derartige temporär auftretende und gewöhnlich nicht zu lokalisierende Fehler können "Bitkipper" im Arbeitsspeicher oder ein fehlerhaftes Verhalten eines Programms oder Programmteils sein, wobei dieses Verhalten sich nur unter einer bestimmten Bedingung einstellt. Ein transienter Fehler verursacht häufig einen Totalausfall beider Teilsysteme, weil der Fehler nicht zu lokalisieren ist und eine Synchronisation der beiden Teilsysteme quasi unmöglich macht; denn gewöhnlich wird eines der beiden Teilsysteme willkürlich in einen STOPP-Zustand überführt, wobei für den Fall, dass das "fehlerfreie" Teilsystem in den STOPP-Zustand überführt wurde, das noch laufende "fehlerbehaftete" Teilsystem kurz nach dieser Überführung ausfällt.

In der älteren europäischen Patentanmeldung 12166006.2, deren gesamter Offenbarungsgehalt Bestandteil der vorliegenden Anmeldung sein soll, wird ein Verfahren zum Betreiben eines redundanten, mit einem ersten und einem zweiten Teilsystem versehenen Automatisierungssystems vorgeschlagen, mittels welchem im Hinblick auf eine Synchronisation der Programmverarbeitung auf den beiden Teilsystemen auf eine zeitlich synchrone Kommunikation zwischen den Teilsystemen verzichtet wird. Eins dieser Teilsysteme in Form eines Masters wartet nicht (aktiv) auf eine Antwort des anderen Teilsystems in Form eines Slaves bzw. einer Reserve um seine Programmverarbeitung fortzusetzen; die Übertragung aller relevanten Informationen von dem Master zu dem Slave erfolgt zeitlich asynchron. Die Synchronisation der beiden Teilsysteme nach dem Auftreten eines Ereignisses erfolgt derart, dass sowohl der Master als auch der Slave aufgrund dieses Ereignisses gleiche Programmpfade (pfadsynchron) durchlaufen, wobei die Durchläufe zeitlich asynchron erfolgen. Der Master übermittelt dazu dem Slave eine Freigabe, wobei aufgrund der Freigabe Verarbeitungsabschnitte des mittels des Slaves zu verarbeitenden Steuerprogramms verarbeitet werden, welche den bereits verarbeiteten Verarbeitungsabschnitten des mittels des Masters zu verarbeitenden Steuerprogramms bis zu der Freigabe entsprechen. Dies bedeutet, dass der Master im Hinblick auf die Programmver- bzw. -bearbeitung dem Slave zeitlich vorausläuft bzw. der Slave dem Master zeitlich nachläuft. Unter einem "Nachlauf" bzw. "Vorauslauf" wird in diesem Zusammenhang die zeitliche Differenz zwischen dem Beginn der Verarbeitung der Verarbeitungsabschnitte durch den Master und dem Beginn der Verarbeitung der Verarbeitungsabschnitte durch den Slave, was dem Zeitpunkt des Auftretens des Freigabesignals entspricht, verstanden. Auch in einem derartigen redundanten Automatisierungssystem sind geeignete Maßnahmen zur Beherrschung von transienten Fehlern vorzusehen, wobei diese Fehler bewirken können, dass der Master und der Slave die Steuerprogramme nicht mehr pfadsynchron bearbeiten.

Der Erfindung liegt die Aufgabe zugrunde, ein Verfahren der eingangs genannten Art anzugeben, mittels welchem die störenden Auswirkungen eines transienten Fehlers in einem redundanten Automatisierungssystem weitgehend vermieden werden. Darüber hinaus ist ein redundantes Automatisierungssystem zu schaffen, welches zur Durchführung des Verfahrens geeignet ist.

Diese Aufgabe wird im Hinblick auf das Verfahren durch die im kennzeichnenden Teil des Anspruchs 1 angegebenen, bezüglich des Automatisierungssystems durch die im kennzeichnenden Teil des Anspruchs 3 angegebenen Maßnahmen gelöst.

Unabhängig davon, ob ein transienter Fehler auf dem Master oder auf dem Slave eines pfadsynchron betriebenen Automatisierungssystems auftritt, in welchem die Durchläufe der Pfade zeitlich asynchron erfolgen, ist dieser Fehler weitgehend beherrschbar, wobei ein Totalausfall des redundanten Automatisierungssystems vermieden wird.

Der Slave prüft die vom Master übermittelten Informationen auf Plausibilität und kann dadurch erkennen, ob in diesem redundanten Automatisierungssystem die Synchronisation gestört ist. Beispielsweise übermittelt der Master dem Slave eine Freigabe zur Verarbeitung von mehreren Verarbeitungsschritten eines Programmpfades, der gemäß dem aktuellen Slave-Zustand überhaupt nicht zur Verarbeitung ansteht, oder dem Slave wird eine Master-Anweisung zugeführt, die im Widerspruch zu einer vorherigen abzuarbeitenden Anweisung steht. Dabei braucht der Fehler nicht lokalisiert zu werden, es kann selbstverständlich sein, dass aufgrund eines transienten Fehlers im Automatisierungssystem der Master oder der Slave fehlerbehaftet ist.

Aufgrund eines transienten Fehlers sind folgende Auswirkungen möglich:
A) Für den Fall, dass beispielweise ein derartiger Fehler sich auf dem Slave einstellt, dieser Fehler allerdings nicht zum Ausfall des Slaves führt, steuert der Master nach wie vor den technischen Prozess, wobei im Weiteren der Slave im Hinblick auf pfadsynchrone Programmdurchläufe den zeitlichen Nachlauf minimiert. Dieser Nachlauf spiegelt die zeitliche Differenz des Beginns der Steuerprogrammverarbeitung zwischen dem Slave und dem Master wider.
B) Auch für den Fall, dass der Fehler auf dem Slave zum Ausfall des Slaves führt, was kurzzeitig einen Redundanzverlust bedeutet, steuert der Master weiterhin den technischen Prozess, wobei nach einem vollständigen Zurücksetzen und Neustart des Slaves dieser sich wiederum mit dem Master synchronisiert (ähnlich wie nach einer Reparatur und einem Austausch des Slaves).
C) Falls der transiente Fehler auf dem Master erscheint, dieser allerdings keinen Ausfall des Masters bewirkt, behält der Master die Masterschaft, da in diesem Fall die störenden Auswirkungen des Fehlers nur von sehr kurzer Dauer sind. Die Slave-Abbildsicherung wird aktualisiert und unter Berücksichtigung der gesicherten Prozesseingabewerte und der gesicherten Freigaben wird das Slave-Steuerprogramm verarbeitet und der zeitliche Nachlauf verringert.
D) Führt der transiente Fehler auf dem Master allerdings zu einem Ausfall des Masters, so übernimmt der Slave die Masterschaft, wobei der Slave seine Abbildsicherung und die vom Master nach der Plausibilitätsprüfung übermittelten Prozesseingangswerte berücksichtigt. Dadurch, dass Änderungen im Abbild sowie Master-Freigaben im Hinblick auf die Slave-Steuerprogrammverarbeitung nicht berücksichtigt werden, jedoch der Slave auf Basis der Prozesseingangswerte sein Steuerprogramm parallel - bis zum Ausfall des Masters - zum Master-Steuerprogramm bearbeitet, wird der Sprung (Stoß) an den Prozessausgängen minimiert Darüber hinaus wird ein Totalausfall des Automatisierungssystems verhindert.

In einer Ausgestaltung der Erfindung ist vorgesehen, dass zur Feststellung der Inhaltsunterschiede zwischen den Abschnitten der Master- und Slave-Abbildsicherungen Hash-Werte der Abschnitte der Master- und Slave-Abbildsicherungen ermittelt werden. Mittels derartiger Maßnahmen können die Inhaltsunterschiede schnell ermittelt werden.

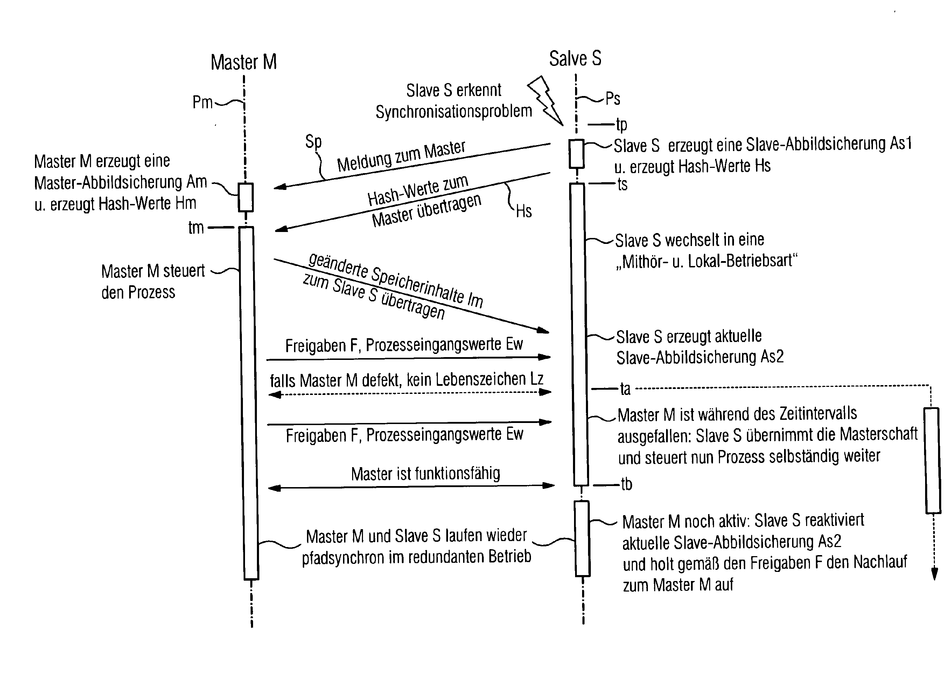

Die Erfindung wird nachfolgend anhand eines Ausführungsbeispiels unter Bezugnahme auf die einzige Figur der Zeichnung näher erläutert. Die Figur der Zeichnung zeigt in vereinfachter Darstellung den Verfahrensablauf zur Vermeidung der störenden Auswirkungen eines transienten Fehlers im Hinblick auf die Synchronisation der Programmverarbeitung in einem redundanten Automatisierungssystem.

Es wird im Folgenden angenommen, dass sowohl ein Master M als auch ein Slave S bzw. eine Reserve des redundanten Automatisierungssystems jeweils ein Steuerprogramm Pm, Ps zur Steuerung eines technischen Prozesses verarbeitet, wobei die Verarbeitung programmpfadsynchron, die Durchläufe dieser Programmpfade allerdings zeitlich asynchron erfolgen. Im diesem Zusammenhang auf eine derartige Verarbeitung wird auf die bereits genannte ältere europäische Patentanmeldung 12166006.2 verwiesen.

Während der Verarbeitung der Steuerprogramme Pm, Ps tauschen der Master M und der Slave S zyklisch oder zu vorgebbaren oder vorgegebenen Zeiten Lebenszeichen Lz aus. Der Master M zeigt mittels eines derartigen Lebenszeichens Lz an, dass der Master M noch aktiv d. h. im RUN-Betrieb ist, entsprechend zeigt ein vom Slave S dem Master M gesendetes Lebenszeichen Lz dem Master an, dass der Slave S noch aktiv ist.

Ferner wird angenommen, dass zu einem Zeitpunkt tp der Slave S während einer Plausibilitätsprüfung ein Synchronisationsproblem erkennt, weil z. B aufgrund eines "Bitkippers" der Master M dem Slave S eine Freigabe zur Verarbeitung von mehreren Verarbeitungsschritten eines Programmpfades des Steuer-programms Pm übermittelt, der gemäß dem aktuellen Slave-Zustand gar nicht zur Verarbeitung ansteht. In diesem Fall zeigt bzw. meldet der Slave S dem Master M das Synchronisationsproblem in Form einer Nachricht Sp, hinterlegt ein aktuelles Abbild seines Speichers in eine Slave-Abbildsicherung As und übermittelt ferner dem Master M über Abschnitte des Slave-Speichers gebildete Hash-Werte Hs. Aufgrund der Nachricht Sp sichert der Master M ebenfalls ein aktuelles Abbild seines Speichers in einer Master-Abbildsicherung Am und ermittelt über den Slave-Abschnitten entsprechende Abschnitte des Masterspeichers gebildete Hash-Werte Hm, welche der Master M mit den Slave-Hash-Werten Hs vergleicht. Anschließend steuert der Master M ab einem Zeitpunkt tm in gewohnter Art und Weise den technischen Prozess, indem der Master M Prozesseingangswerte Ew einer Prozessperipherie (Messumformer, Messwertgeber, Sensoren) einliest, diese gemäß dem Master-Steuerprogramm Pm verarbeitet und Prozessausgangswerte einer Prozessperipherie (Stellglieder, Aktoren) übermittelt. Ferner führt der Master M dem Slave S ab diesem Zeitpunkt tm die eingelesenen Prozesseingangswerte Ew sowie diejenigen Inhalte Im der Master-Abbildsicherung Am zu, welche sich von den Inhalten der Slave-Abbildsicherung As1 unterscheiden. Der Slave S wechselt nach der Übermittlung der Nachricht im Hinblick auf das Synchronisierungsproblem Sp und die Slave-Hash-Werte Hs ab einem Zeitpunkt ts in eine Mithör- und Lokal-Betriebsart, in welcher der Slave S während eines vorgebbaren bzw. vorgegebenen Zeitintervalls vom Zeitpunkt ts bis zu einem Zeitpunkt tb
- einerseits die vom Master M zugeführten Prozesseingangswerte Ew und die Slave-Abbildsicherung As nach Maßgabe seines Steuerprogramm Ps verarbeitet, wobei der Slave S der Prozessperipherie keine Prozessausgangswerte ausführt, und
- andererseits diese Prozesseingangswerte Ew und die vom Master M dem Slave S ebenfalls zugeführten Freigaben sichert sowie die Slave-Abbildsicherung As1 mit denjenigen Inhalten Im der Master-Abbildsicherung Am aktualisiert, die sich von den Inhalten der Slave-Abbildsicherung As1 unterscheiden (im Folgenden als "aktualisierte Slave-Abbildsicherung As2" bezeichnet).

Das Zeitintervall vom Zeitpunkt ts bis zum Zeitpunkt tb ist so gewählt, dass im störungsfreien Betrieb der Master M dem Slave S Lebenszeichen Lz übermittelt bzw. der Slave S den Empfang derartiger Master-Lebenszeichen Lz sicher erwarten kann.

Für den Fall, dass während des Zeitintervalls der Slave S aufgrund nicht empfangener Master-Lebenszeichen Lz einen Ausfall des Masters M erkennt - was in der Zeichnung mittels einer gestrichelten Linie dargestellt ist - übernimmt der Slave S umgehend die Masterschaft, was in der Zeichnung zu einem Zeitpunkt ta angedeutet ist. Ab diesem Zeitpunkt ta verlässt der Slave S seine Mithör- und Lokal-Betriebsart und steuert selbstständig den technischen Prozess, wobei in diesem Fall der Slave S die gesicherten Prozesseingangswerte Ew sowie die folgenden von der Peripherie dem Slave S übermittelten Prozesseingangswerte Ew verarbeitet und der Peripherie auch Prozessausgangswerte zuführt.

Für den Fall, dass während des Zeitintervalls der Slave S weiterhin Master-Lebenszeichen Lz empfängt, verlässt der Slave S zum Zeitpunkt tb seine Mithör- und Lokal-Betriebsart. Der Slave S verarbeitet sein Steuerprogramm Ps unter Berücksichtigung der aktualisierten Slave-Abbildsicherung As2 sowie der während des Zeitintervalls gesicherten Prozesseingangswerte Ew und der gesicherten Freigaben F. Aufgrund der Freigaben F verarbeitet der Slave S die Verarbeitungsabschnitte seines Steuerprogramms Ps, die den bereits verarbeiteten Verarbeitungsabschnitten des Master-Steuerprogramms Pm ab dem Zeitpunkt tm -also nach der Erzeugung der Master-Abbildsicherung Am -entsprechen. Der Master M und der Slave S durchlaufen ihre jeweiligen Steuerprogramme Pm, Ps pfadsynchron, wobei die Durchläufe zeitlich asynchron erfolgen und der Slave S im Hinblick auf die Steuerprogrammverarbeitung dem Master M zeitlich nachläuft.

Es kann selbstverständlich vorkommen, dass zu dem Zeitpunkt tp der Slave S während einer Plausibilitätsprüfung ein Synchronisationsproblem erkennt, der transiente Fehler allerdings auf dem Slave S aufgetreten war. Der Verfahrensablauf zur Vermeidung der störenden Auswirkungen dieses transienten Fehlers im Hinblick auf die Synchronisation der Programmverarbeitung wird - falls der Slave S nicht ausfällt - ebenfalls in der beschriebenen Art und Weise bewerkstelligt.

Für den Fall, dass dieser Fehler nicht zum Ausfall des Slaves S führt, durchlaufen auch hier der Master M und der Slave S ihre jeweiligen Steuerprogramme Pm, Ps pfadsynschron, wobei die Durchläufe zeitlich asynchron erfolgen und der Slave S im Hinblick auf die Steuerprogrammverarbeitung dem Master M zeitlich nachläuft. Der Slave S ist dazu ausgebildet, relativ zum Master schneller zu laufen, um den zeitlichen Nachlauf zu minimieren.

Falls der transiente Fehler zum Ausfall des Slaves S führt, was kurzzeitig einen Redundanzverlust bedeutet, behält der Master M die Masterschaft, wobei nach einem vollständigen Zurücksetzen und Neustart des Slaves S dieser sich wiederum - ähnlich wie nach einer Reparatur oder einem Austausch des Slaves S - mit dem Master M synchronisiert.

## Patentansprüche

1. Verfahren zum Betreiben eines redundanten, mit einem Master (M) und einem Slave (S) versehenen Automatisierungssystems, welche während der Steuerung eines technischen Prozesses jeweils ein Steuerprogramm (Pm, Ps) verarbeiten, wobei
- nur der Master (M) Prozessausgangswerte einer Peripherie übermittelt,
- für den Fall, dass der Master (M) ausfällt, der Slave (S) die Funktion des Masters (M) übernimmt und
- der Master (M) dem Slave (S) zyklisch oder zu vorgegebenen Zeiten Lebenszeichen (Lz) übermittelt, die anzeigen, dass der Master (M) im Run-Betrieb ist,
**dadurch gekennzeichnet, dass** die vom Master (M) dem Slave (S) übermittelten Informationen vom Slave (S) auf Plausibilität geprüft werden, wobei für den Fall, dass die Informationen als unplausibel bewertet werden, das aktuelle Abbild des Master-Speichers in einer Master-Abbildsicherung (Am) des Masters (M) und das aktuelle Abbild des Slave-Speichers in einer Slave-Abbildsicherung (As1) des Slaves (S) hinterlegt werden und
- innerhalb eines vorgegebenen Zeitintervalls,
- das Slave-Steuerprogramm (Ps) unter Berücksichtigung der vom Master (M) dem Slave (S) übermittelten und auf dem Slave (S) gesicherten Prozesseingangswerte (Ew) verarbeitet wird,
- mittels des Masters (M) diejenigen Inhalte (Im) der Abschnitte der Master-Abbildsicherung (Am) dem Slave (S) übermittelt werden, die sich von denen der Slave-Abbildsicherung (As1) unterscheiden, wobei mittels dieser Inhalte (Im) und der Slave-Abbildsicherung (As1) eine aktualisierte Slave-Abbildsicherung (As2) erzeugt wird,
- mittels des Masters (M) dem Slave (S) übermittelte Freigaben gesichert werden, wobei die Freigaben anzeigen, welche Verarbeitungsabschnitte des Master-Steuer-programms (Pm) der Master (M) nach der Erzeugung seiner Abbildsicherung (Am) bereits verarbeitet hat,
- für den Fall, dass durch den Slave (S) kein Lebenszeichen (Lz) des Masters (M) empfangen wird, vom Slave (S) die Masterschaft übernommen wird,
- nach Ablauf des vorgegebenen Zeitintervalls für den Fall, dass durch den Slave (S) ein Lebenszeichen (Lz) des Masters (M) empfangen wird und unter Berücksichtigung der aktualisierten Slave-Abbildsicherung (As2), der gesicherten Prozesseingangswerte (Ew) und der gesicherten Freigaben die freigegebenen Verarbeitungsabschnitte des Slave-Steuerprogramms (Ps) verarbeitet werden.

2. Verfahren nach Anspruch 1, **dadurch gekennzeichnet, dass** zur Feststellung der Inhaltsunterschiede (Im) zwischen den Abschnitten der Master- und Slave-Abbildsicherungen (Am, As1) Hash-Werte (Hm, Hs) der Abschnitte der Master- und Slave-Abbildsicherungen (Am, As1) ermittelt werden.

3. Redundantes, mit einem Master (M) und einem Slave (S) versehenes Automatisierungssystem, welche während der Steuerung eines technischen Prozesses jeweils ein Steuerprogramm (Pm, Ps) verarbeiten, wobei
- für den Fall, dass der Master (M) ausfällt, der Slave (S) die Funktion des Masters (M) übernimmt und
- der Master (M) dem Slave (S) zyklisch oder zu vorgegeben Zeiten Lebenszeichen (LZ) übermittelt, die anzeigen, dass der Master (M) im Run-Betrieb ist,
- nur der Master (M) Prozessausgangswerte einer Peripherie übermittelt,
**dadurch gekennzeichnet, dass**
- der Slave (S) dazu ausgebildet ist, die vom Master (M) dem Slave (S) übermittelten Informationen auf Plausibilität zu prüfen, und für den Fall, dass die Informationen als unplausibel bewertet werden, das aktuelle Abbild des Slave-Speichers in einer Slave-Abbildsicherung (As1)zu hinterlegen,
- der Master (M) dazu ausgebildet ist, aufgrund einer Synchronisations-Nachricht (Sp) das aktuelle Abbild des Master-Speichers in einer Master-Abbildsicherung (Am) zu hinterlegen, und innerhalb eines vorgegebenen Zeitintervalls diejenigen Inhalte (Im) der Abschnitte der Master-Abbildsicherung (Am), die sich von den Abschnitten der Slave-Abbildsicherung (As1) unterscheiden, dem Slave (S) zu übermitteln,
- der Slave (S) dazu ausgebildet ist, innerhalb des vorgegebenen Zeitintervalls
- aus der Slave-Abbildsicherung (As1) und den Inhalten (Im) eine aktualisierte Slave-Abbildsicherung (As2) zu erzeugen,
- das Slave-Steuerprogramm (Ps) unter Berücksichtigung der vom Master (M) dem Slave (S) übermittelten und auf dem Slave (S) gesicherten Prozesseingangswerte (Ew) zu verarbeiten sowie die vom Master (M) übermittelten Freigaben zu sichern, wobei die Freigaben anzeigen, welche Verarbeitungsabschnitte des Master-Steuerprogramms (Pm) nach der Erzeugung der Master-Abbildsicherung (Am) der Master (M) bereits verarbeitet hat,
- für den Fall, dass der Slave (S) kein Lebenszeichen (Lz) des Masters (M) empfangen hat, die Masterschaft zu übernehmen,
- der Slave (S) ferner dazu ausgebildet ist, nach Ablauf des vorgegebenen Zeitintervalls für den Fall, dass der Slave (S) ein Lebenszeichen (Lz) des Masters (M) erhalten hat, unter Berücksichtigung der aktualisierten Slave-Abbildsicherung (As2), der gesicherten Prozesseingangswerte (Ew) und der gesicherten Freigaben die freigegebenen Verarbeitungsabschnitte des Slave-Steuer-programms (Ps) zu verarbeiten.

4. Redundantes Automatisierungssystem nach Anspruch 3, **dadurch gekennzeichnet, dass**
- der Slave (S) dazu ausgebildet ist, Hash-Werte (Hs) für die Abschnitte der Slave-Abbildsicherung (As1) zu bilden und diese dem Master (M) zu übermitteln, und
- der Master (M) dazu ausgebildet ist, Hash-Werte (Hm) für die Abschnitte der Master-Abbildsicherung (Am) zu bilden und diese Hash-Werte (Hm) mit den Slave-Hash-Werten (Hs) zur Feststellung der Inhaltsunterschiede (Im) zu vergleichen.
